# EUROPÄISCHE PATENTSCHRIFT

(11) **EP 1 045 771 B1**
(45) Veröffentlichungstag und Bekanntmachung des Hinweises auf die Patenterteilung: **28.11.2001**
(21) Anmeldenummer: 99900183.7
(22) Anmeldetag: 11.01.1999
(51) Int. Cl.: B60K 1/00, B60K 17/04

(54) **ANTRIEB FÜR EIN FAHRZEUG, INSBESONDERE FÜR EIN MEHRSPURIGES ELEKTROMOBIL**
DRIVE MECHANISM FOR A VEHICLE, ESPECIALLY A MULTILANE ELECTROMOBILE
SYSTEME D'ENTRAINEMENT POUR VEHICULE, NOTAMMENT POUR VEHICULE ELECTRIQUE A ECARTEMENT VARIABLE DES ROUES

(30) Priorität: 16.01.1998 AT 5998
(43) Veröffentlichungstag der Anmeldung: 25.10.2000
(73) Patentinhaber: Wachauer, Oskar, 8795 Hieflau (AT)
(72) Erfinder: WACHAUER, Oskar, 8795 Hieflau (AT); WACHAUER, Sonja, 8795 Hieflau (AT)
(74) Vertreter: Krause, Peter
(86) Internationale Anmeldenummer: AT9900006
(87) Internationale Veröffentlichungsnummer: WO9936286

(56) Entgegenhaltungen:
- EP-A- 0 587 120
- EP-A- 0 867 324
- US-A- 3 267 311
- US-A- 4 130 172
- US-A- 5 408 169
- US-A- 5 804 935
- PATENT ABSTRACTS OF JAPAN vol. 001, no. 112 (E-048), 28. September 1977 & JP 52 045009 A (EKUTASU SYST KK), 8. April 1977 & JP 52 045009 A (EKUTASU SYST KK)

## Beschreibung

Die Erfindung betrifft einen elektrischen Antrieb für ein Fahrzeug, insbesondere für ein mehrspuriges Elektromobil, wobei ein zum Fahrzeugaufbau bzw. zum Fahrzeugrahmen feststehendes Gehäuse vorgesehen ist, wobei in diesem Gehäuse ein Motorgehäuse mit einem Ständer und ein im Motorgehäuse vorgesehener Läufer jeweils drehbar gelagert sind und das Motorgehäuse und der Läufer zur Arbeitsleistung eine gegensinnige Drehbewegung ausführen, wobei ein Antriebsstrang mit dem Läufer bzw. mit dem Motorgehäuse verbunden ist und die Drehbewegung des Läufers bzw. des Motorgehäuses über eine Getriebeeinrichtung mit gleichsinniger An- und Abtriebsdrehrichtung und ein anderer Antriebsstrang mit dem Motorgehäuse bzw. mit dem Läufer verbunden ist und die Drehbewegung des Motorgehäuses bzw. des Läufers über eine Getriebeeinrichtung mit gegensinniger An- und Abtriebsdrehrichtung übersetzt ist.

Derartige elektrische Antriebe finden bei zweispurigen Fahrzeugen, sowohl bei Straßenwie auch bei Nutzfahrzeugen, immer mehr Verwendung. Die übliche Ausführung verwendet vorwiegend zwei unabhängige Elektromotoren, die durch je ein Stirnrad-, oder Planetengetriebe so untersetzt sind, daß die Motoren mit wesentlich höherer Drehzahl laufen können als die Antriebsräder. Dadurch kann das Bauvolumen und das Gewicht der Antriebseinheit verringert werden. Nachteilig dabei ist aber sicherlich der hohe Aufwand für die einzelnen Teile.

Aus der JP 52 045 009 A ist ein elektrischer Antrieb, wie er eingangs zitiert wird, bekannt. Nachteilig bei diesem bekannten Antrieb ist, daß er ein normales zweistufiges Stirnradgetriebe umfaßt. Dadurch werden die Verluste kumuliert. Es ergibt sich damit ein schlechter Wirkungsgrad.

Weiters beschreibt die DE 26 06 807 B einen Elektromotor mit beidseitigem Abtrieb, in dessen Ständer zwei mechanisch und elektrisch selbständige Läufer einer gemeinsamen Erregung durch den Ständer unterliegen, wobei die Läufer derart gelagert sind, daß kein Lagerschild für die der jeweiligen Abtriebseite gegenüberliegenden Läuferlagerung notwendig ist.

In der DE 42 36 093 A ist ein Antriebssystem für ein Elektrofahrzeug beschrieben, das mehrere Motoren und Untersetzungsgetriebe mit Planetengetriebeeinrichtungen aufweist, die in einer kraftübertragenden Weise zwischen den Motoren und Rädern des Elektrofahrzeuges verbunden sind, wobei die Verbesserung darin besteht, daß die Motoren und Getriebe derart koaxial angeordnet sind, daß sie koaxial zwischen dem rechten und linken Rad des Elektrofahrzeuges angeordnet werden können. Dabei sind sämtliche beschriebenen Antriebskomponenten in einem Gehäuse angeordnet. Durch eine geeignete Auswahl der Kraftübertragung kann durch die Getriebeeinrichtungen die Drehmomentaufteilung an den Radachsen vorteilhaft beeinflußt werden.

Ebenso beschreibt die DE 44 21 425 C den Antrieb eines Straßenfahrzeuges mit einem elektrischen Antriebsaggregat, in dem zwei voneinander gesondert funktionsfähige Baueinheiten mit je einem Elektromotor und einem dem jeweiligen Antriebsrad zugewandt angeordnetem Getriebe, ausgeführt als Stirnradgetriebe mit exzentrisch zur Drehachse des Elektromotors angeordneter Abtriebswelle, oder aber als Planetengetriebe, auf die Antriebsräder einer Fahrzeugachse wirken. Elektromotoren, Getriebe und Abtriebswellenlagerung sind dabei auf einem gemeinsamen Trägerteil gelagert.

Nachteilig bei den oben aufgezeigten herkömmlichen Antriebsaggregaten ist die Verwendung zweier mechanisch und elektrisch unabhängiger Elektromotoren, wobei für jedes Antriebsrad mehr oder weniger der gleiche Bauaufwand erforderlich ist, da jedem Antriebsrad auch ein Getriebe zugeordnet ist.

Aufgabe der Erfindung ist es, einen elektrischen Antrieb für ein Fahrzeug zu schaffen, der einerseits die Nachteile der oben aufgezeigten Antriebe vermeidet und der anderseits in seiner Gesamtkonzeption einfach im Aufbau ist und speziell die Forderung von einem einfachen Getriebeaufbau erfüllt.

Der erfindungsgemäße elektrische Antrieb ist dadurch gekennzeichnet, daß die Getriebeeinrichtungen Planetengetriebe sind, wobei der Läufer über eine Welle bzw. das Motorgehäuse über eine Welle mit einem Planetenkäfig des zugeordneten Planetengetriebes fest verbunden ist und eine Planetenachse mindestens eines Planetenradsatzes bewegt.

Mit der Erfindung ist es erstmals möglich, einen Antrieb zu schaffen, der zwischen dem linken und rechten Antriebsrad angeordnet ist, die Differentialfunktion erfüllt und dabei einen so geringen Bauraum beansprucht, daß eine starre, koaxiale Verbindung zwischen Radachsen und Antrieb möglich ist, ohne die Bodenfreiheit des Fahrzeuges unzulässig zu verringern.

Die Erfindung geht davon aus, daß bei jeder Antriebsmaschine, die ihre mechanische Arbeit mittels einer Drehbewegung abgibt, das Moment an der Abtriebswelle gleich groß ist dem Moment, mit dem die Maschine zu seiner Umgebung abgestützt werden muß. In der herkömmlichen Ausführung mit feststehender Maschine wird damit die Antriebsleistung ausschließlich über die sich bewegende Abtriebswelle abgegeben. Die Erfindung will jedoch eine Leistungsverzweigung auf zwei Antriebsstränge erreichen, um den Gegebenheiten des Fahrzeugantriebes gerecht zu werden. Dies läßt sich erfindungsgemäß dadurch bewerkstelligen, daß einerseits die Abtriebswelle eine Drehbewegung, beispielsweise des Läufers, über den ersten Antriebsstrang ausführt, andererseits auch das Motorengehäuse eine zur Drehrichtung der Abtriebswelle gegenläufige Drehbewegung über den zweiten Antriebsstrang ausführt. Eine Arbeitsleistung beider Antriebsstränge wird erreicht, wenn die Drehbewegung dem auftretenden Drehmoment gleichsinnig ist, was bei der erfindungsgemäßen Anordnung zwangsläufig der Fall ist. Durch die elektromagnetische Erzeugung des Drehmomentes, das einerseits als Aktionsmoment an der Abtriebswelle abzugreifen ist, andererseits als Reaktionsmoment am Motorengehäuse anliegt, besteht keine mechanische Verbindung zwischen diesen beiden Teilen der Anordnung, die die freie Drehbarkeit beider Teile verhindert. Bei einem Antrieb für ein Straßenfahrzeug ist es also notwendig, daß die Arbeitsleistung der Antriebsräder bei gleichsinniger Drehbewegung des linken und rechten Rades erfolgt. Dies wird durch den erfindungsgemäßen Antrieb erreicht.

Vorteilhaft ist die Ausbildung nach Anspruch 2, da in einer Übersetzungsstufe, die erforderliche Übersetzung zwischen Antrieb und Radwellen erzielt werden kann.

Nach einer vorteilhaften Weiterbildung nach Anspruch 3 ergibt sich, bei festgelegtem Umlaufdurchmesser der Planetensätze, das Übersetzungsverhältnis ausschließlich aus dem Durchmesser des größeren Sonnenrades, sowie der Differenz der Durchmesser der beiden Sonnenräder. Die erwünschte Drehrichtung der Radwellen wird hingegen bei gegebenem Übersetzungsverhältnis durch die Anordnung des größeren Sonnenrades entweder feststehend zum Fahrzeug oder verbunden mit den Radwellen erzielt. Die Anordnung der Planetenräder ergibt sich aus den notwendigen Eingriffsverhältnissen zwingend.

Die Ausgestaltung nach Anspruch 4 weist den Vorteil auf, daß jedoch jede beliebige Leistungsaufteilung auf die Antriebsstränge denkbar ist, wenn die Übersetzungen der Getriebe in entsprechendes Verhältnis zueinander gesetzt werden.

Vorteilhaft ist durch die Weiterbildung nach Anspruch 5, daß durch ein zusätzliches, wahlweise gegenüber dem Fahrzeug, drehfest einkuppelbares Sonnenrad eine zweite Übersetzungsstufe geschaltet werden kann.

Nach einer weiteren Ausgestaltung gemäß Anspruch 6 ist eine zum Gehäuse drehfest gelagerte Bremsscheibe vorgesehen. Durch diese vorteilhafte Ausgestaltung läßt sich eine beträchtliche Vereinfachung der gesamten Achskonstruktion erreichen, wenn für jeden Antriebsstrang je eine magnetisch betätigte Bremsvorrichtung vorgesehen wird, bei der ein zum Fahrzeug feststehender Ring, dessen Reibfläche zur Verstärkung des Bremsmomentes konisch ausgebildet sein kann, auf eine entsprechende Gegenfläche am Planetenkäfig wirkt. Da der Planetenkäfig mit der hohen Drehzahl des Motors läuft, wird das aufgebrachte Bremsmoment von der Übersetzung der Getriebes verstärkt, so daß ein wesentlich größeres Bremsmoment an den Radwellen wirkt. Die Bremse kann derart ausgebildet werden, daß der Reibring im stromlosen Zustand des Betätigungsmagneten durch Federkraft an den Planetenkäfig angedrückt wird, wodurch die Funktion einer Feststellbremse erreicht wird. Durch dosiertes Aufbringen der Magnetkraft des Betätigungsmagneten kann die beschriebene Bremsvorrichtung aber auch als Fahrbremse genutzt werden.

Es ist aber auch denkbar, eine Reibungsfläche vorzusehen, die gleichzeitig auf das Motorgehäuse einerseits und auf ein sich mit der Läuferdrehung gekoppeltes Teil der Getriebeeinrichtung des Läuferantriebsstranges anderseits wirkt. Durch eine derartige Bremsvorrichtung können beide Antriebsstränge gleichzeitig verzögert werden.

Gemäß einer Ausbildung wie in Anspruch 7 beschrieben, ergibt sich daraus der bauliche Vorteil, daß im Normalfall, also bei gleicher Verzögerung beider Antriebsstränge, kein freies Reaktionsmoment auftritt, das am Gehäuse abzustützen ist.

Vorteilhaft ist auch die Weiterbildung nach Anspruch 8, da durch den Angriff der Bremse auf die schnelldrehenden Komponenten das Moment an den Radwellen um das Übersetzungsverhältnis verstärkt wird.

Dabei erweist sich eine Ausgestaltung nach Anspruch 9 als vorteilhaft, da ein einfacher Bauteil als Bremse Verwendung findet.

Möglich ist dabei auch eine Ausbildung nach Anspruch 10, da auch in diesem Fall nur einfachste mechanische Komponenten eingesetzt werden.

Von Vorteil ist aber auch eine Ausbildung nach Anspruch 11, da durch die geringen Betätigungskräfte eine magnetische Betätigung durchaus denkbar ist.

Für die elektromechanische Wandlung kann eine Asynchronmaschine mit Kurzschlußläufer vorgesehen werden. Da beim erfindungsgemäßen Antrieb das Motorgehäuse drehbar auf der dazugehörigen Abtriebswelle gelagert ist, muß die Stromzufuhr zum Motor über Schleifringe am Umfang des Motorgehäuses erfolgen. Für die elektromechanische Wandlung eignet sich bevorzugt das Prinzip der Asynchronmaschine mit Kurzschlußläufer, deren Drehfeld mit fahrgeschwindigkeitsabhängiger Frequenzsteuerung durch elektronische Kommutierung erzeugt wird. Denkbar ist jedoch jede Art elektrischer Antriebsmaschine, bei der zwischen Ständer und Läufer ein Drehmoment erzeugt wird.

Schließlich ist aber auch eine Ausbildung möglich, bei der das Gehäuse mit dem Motorgehäuse und dem Läufer sowie die Getriebeeinrichtungen und die Radwellen mit ihrer Lagerung eine Baueinheit bilden. Durch die Bildung einer Baueinheit sind wirtschaftliche Vorteile gegeben, die von der Herstellung, über Ersatzteilhaltung bis zum Vertrieb reichen. Darüber hinaus kann dabei die Lagerung der abtriebsseitigen Sonnenräder der Getriebeeinrichtungen zweckmäßig so ausgelegt werden, daß sie die Aufnahme der Radkräfte gestattet, so daß keine weitere Achslagerung erforderlich ist. Denkbar ist jedoch eine Anbringung von Gelenkwellen, um die ungefederte Masse des Fahrzeuges zu verringern und gegebenenfalls die Bodenfreiheit zwischen den Antriebsrädern zu erhöhen.

Die Erfindung wird an Hand von Ausführungsbeispielen, die in der Zeichnung dargestellt sind, näher erläutert.
Fig. 1 zeigt eine schematische Darstellung des Antriebes,
Fig. 2 eine zweistufige Ausführung der Getriebeeinrichtung,
Fig. 3 einen elektrischen Antrieb im Schnitt und
Fig. 4 eine weitere Variante eines Antriebes im Schnitt.

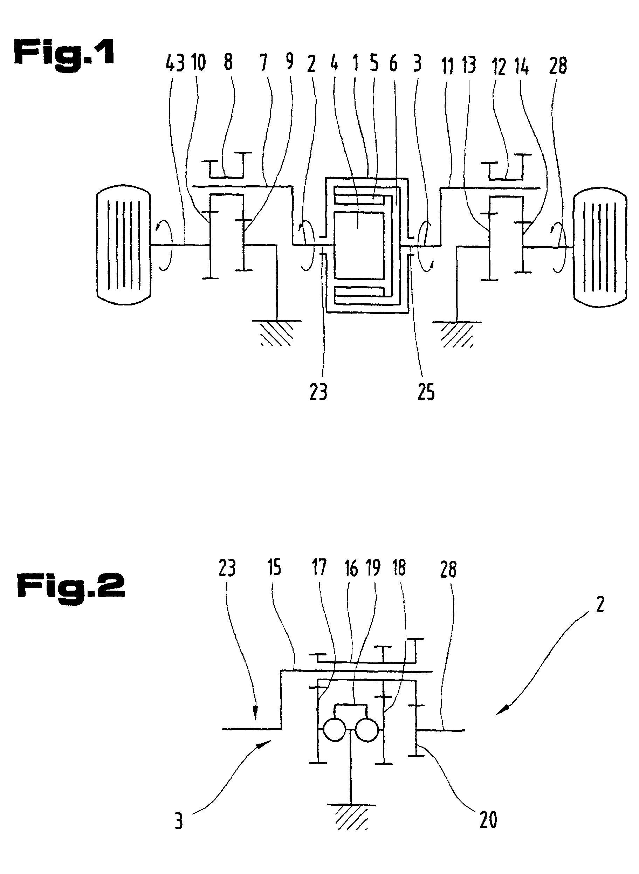

Gemäß der Fig. 1 besteht der elektrische Antrieb aus einem in bezug zum Fahrzeug feststehenden Gehäuse 1, aus dem beidseitig ein erster Antriebsstrang 2 und ein zweiter Antriebsstrang 3 herausgeführt sind. Das Drehmoment des ersten Antriebsstranges 2 wird aufgebracht von einer Welle 25 eines frei drehbar gelagerten Läufers 4, das Drehmoment des zweiten Antriebsstranges 3 wird aufgebracht von einem Ständer 5, der in einem Motorgehäuse 6 befestigt ist. Das Motorgehäuse 6 ist fest verbunden mit einem Wellenstummel 23 des zweiten Antriebsstranges 3. Die Drehbewegung des ersten Antriebsstranges 2 bewegt eine Planetenachse 7 eines Planetenradsatzes 8, der einerseits in ein in bezug zum Fahrzeug feststehendes Sonnenrad 9 der Getriebeeinrichtung des ersten Antriebsstranges 2, andererseits in ein mit einer Radwelle 43 drehbares Sonnenrad 10 des ersten Antriebsstranges 2 eingreift. Bei der Getriebeeinrichtung des ersten Antriebsstranges 2 ist das feststehende Sonnenrad 9 kleiner als das drehbare Sonnenrad 10, wodurch eine gleichsinnige Drehbewegung der An- und Abtriebswelle der Getriebeeinrichtung bewirkt wird. Des weiteren bewegt die Drehbewegung des zweiten Antriebsstranges 3 eine Planetenachse 11 eines Planetenradsatzes 12, der einerseits in ein in bezug zum Fahrzeug feststehendes Sonnenrad 13 der Getriebeeinrichtung des zweiten Antriebsstranges 3, andererseits in ein mit einer Radwelle 28 drehbares Sonnenrad 14 des zweiten Antriebsstranges 3 eingreift. Bei der Getriebeeinrichtung des zweiten Antriebsstranges 3 ist das feststehende Sonnenrad 13 größer als das drehbare Sonnenrad 14, wodurch eine gegensinnige Drehbewegung der An- und Abtriebswelle der Getriebeeinrichtung bewirkt wird.

Die Fig. 2 zeigt die schematische Darstellung einer zweistufigen Getriebeeinrichtung eines Antriebsstranges 3, wobei die Getriebeeinrichtung des zweiten Antriebsstranges 2 sinngemäß zu modifizieren ist, bei dem eine Planetenachse 15 mit dem Wellenstummel 23 umläuft, auf der ein Planetenradsatz 16 mit drei Rädern drehbar gelagert ist. Der Planetenradsatz 16 ist einerseits im Eingriff mit frei drehbaren Sonnenrädern 17, 18, die durch eine Bremsvorrichtung 19 wahlweise bzw. alternativ bezüglich des Fahrzeugs festgestellt werden können, andererseits mit einem Sonnenrad 20, das mit der Radwelle 28 verbunden ist, im Eingriff.

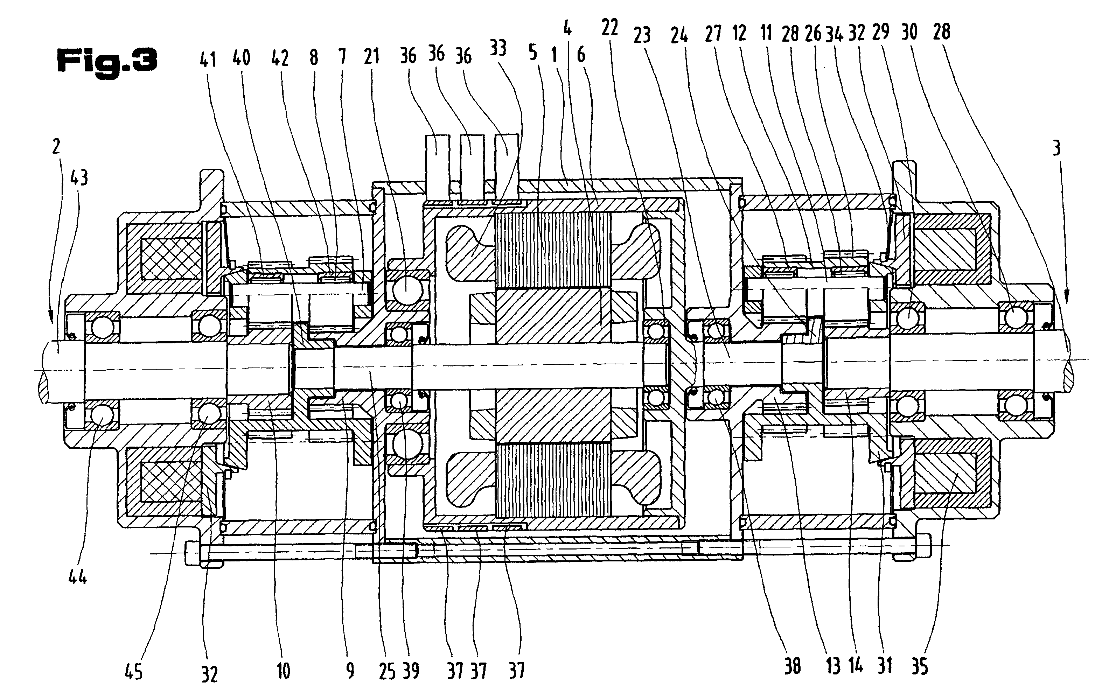

Gemäß der Fig. 3 weist der elektrische Antrieb das feststehende Gehäuse 1 auf, in dem mittels Wälzlager 21, 22 das frei drehbare Motorgehäuse 6, in dem der Ständer 5 des Elektromotors befestigt ist, gelagert ist. Der mit dem Motorgehäuse 6 fest verbundene Wellenstummel 23 ist fest verbunden mit einem Planetenkäfig 24 der Getriebeeinrichtung, auf dessen Planetenachse 11 der Planetenradsatz 12 frei drehbar auf Wälzlagern 26, 27 gelagert ist. Der Planetenradsatz 12 greift einerseits in das zum Gehäuse 1 feststehende Sonnenrad 13 ein, andererseits in das Sonnenrad 14, das auf der rechten Radwelle 28 befestigt ist. Die Radwelle 28 ist auf zwei Wälzlagern 29, 30 drehbar zum Gehäuse 1 gelagert. Der Planetenkäfig 24 ist abtriebsseitig mit einer konischen Reibfläche 31 ausgeführt, auf der eine zum Gehäuse 1 drehfest gelagerte Bremsscheibe 32 anliegen kann. Die Bremsscheibe 32 ist in Ruhestellung durch eine Tellerfeder 34 axial an die konische Reibfläche 31 des Planetenkäfigs 24 angedrückt. Durch eine elektromagnetische Betätigungsvorrichtung 35 kann die Axialkraft der Tellerfeder 34 überwunden und damit die Bremse gelüftet werden.

Die Zuführung der elektrischen Leistung zu einer Erregerwicklung 33 des Ständers 5 erfolgt über Kohlen 36 auf Schleifringe 37 am drehbaren Motorgehäuse 6. Der linke Antriebsstrang 2 ist gebildet aus dem Läufer 4 des Elektromotors, der rechtsseitig im Motorgehäuse 6 durch ein Wälzlager 38, linksseitig im Gehäuse 1 ebenfalls durch ein Wälzlager 39 drehbar gelagert ist und mit einem Planetenkäfig 40 der linken Getriebeeinrichtung fest verbunden ist, auf dessen Planetenachse 7 der Planetenradsatz 8 frei drehbar auf Wälzlagern 41, 42 gelagert ist. Der Planetenradsatz 8 greift einerseits in das zum Gehäuse 1 feststehende Sonnenrad 9 ein, andererseits in das Sonnenrad 10, das auf der rechten Radwelle 43 befestigt ist. Die Radwelle 43 ist auf zwei Wälzlagern 44, 45 drehbar zum Gehäuse 1 gelagert. Die Bremsvorrichtung mit der Bremsscheibe 32 des linken Antriebsstranges 2 ist entsprechend der des rechten Antriebsstranges 3 ausgeführt. Das feststehende Sonnenrad 9 des linken Antriebsstranges 2 ist gleich groß wie das drehbare Sonnenrad 14 des rechten Antriebsstranges 3. Gleiches gilt für das Sonnenrad 13 und das Sonnenrad 10. Da die Umlaufdurchmesser der Planetenachsen 7 bzw. 11 gleich groß sind, ergeben sich die Übersetzungsverhältnisse für die linke und die rechte Getriebeeinrichtung.

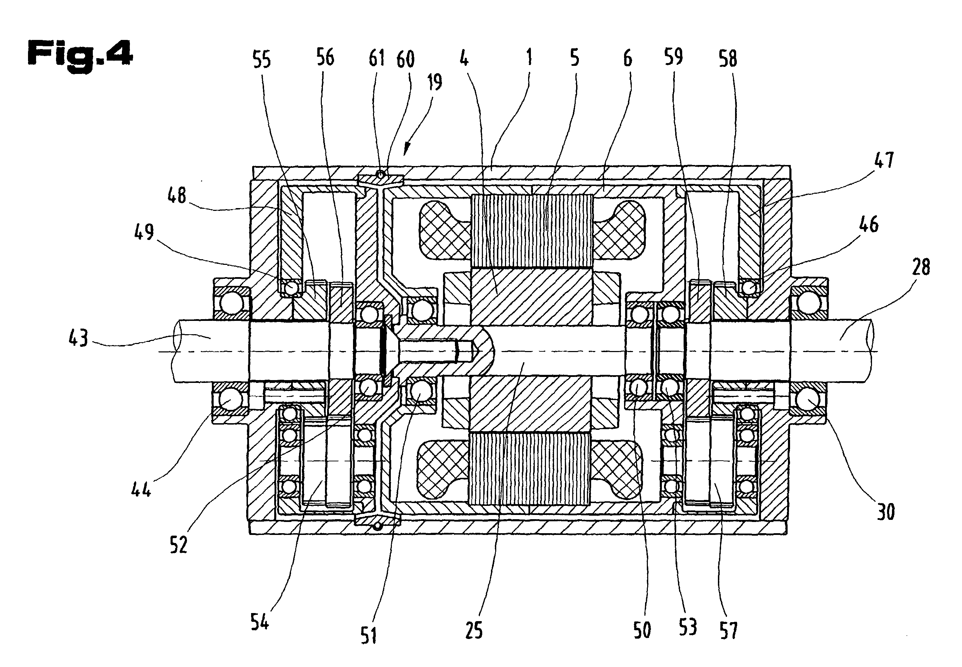

Gemäß der Fig. 4 weist der elektrische Antrieb das feststehende Gehäuse 1 auf, in dem mittels eines Wälzlagers 46 das Motorgehäuse 6, das mit einem Planetenkäfig 47 fest verbunden ist, auf einer Seite gelagert ist. Im Motorgehäuse 6 ist ferner der Ständer 5 und der Läufer 4 mit seiner Welle 25 vorgesehen. Der Läufer 4 ist seinerseits mit einem Planetenkäfig 48 fest verbunden, der über ein Wälzlager 49 im Gehäuse 1 gelagert ist. Die zweite Lagerung des Läufers 4 erfolgt über ein Wälzlager 50, das im Motorgehäuse 6 angeordnet ist. Die zweite Lagerung des Motorgehäuses 6 erfolgt über ein Wälzlager 51, das auf der Welle 25 seinen Sitz hat.

Die Radwelle 43 ist einerseits über das im Gehäuse 1 angeordnete Wälzlager 44 und andererseits über ein im Planetenkäfig 48 vorgesehenes Wälzlager 52 gelagert. Die Radwelle 28 ist über das im Gehäuse 1 angeordnete Wälzlager 30 und ein im Motorgehäuse 6 vorgesehenes Wälzlager 53 gelagert.

Das Planetengetriebe für die Radwelle 43 mit seinem Planetenkäfig 48 weist einen Planetenradsatz 54 und ein mit dem Gehäuse 1 fest verbundenes, feststehendes Sonnenrad 55 sowie ein mit der Radwelle 43 fest verbundenes Sonnenrad 56 auf. Das Planetengetriebe für die Radwelle 28 mit seinem Planetenkäfig 47 weist technisch sinngemäß einen Planetenradsatz 57 und ein mit dem Gehäuse 1 fest verbundenes, feststehendes Sonnenrad 58 sowie ein mit der Radwelle 28 fest verbundenes Sonnenrad 59 auf. Die Drehbewegung des Läufers 4 bzw. des Motorgehäuses 6 wird über die Planetengetriebe, sinngemäß dem Ausführungsbeispiel gemäß Fig. 3, auf die Radwellen 28 bzw. 43 übertragen.

Als Bremsvorrichtung 19 wird eine mechanische Bremse 60 vorgesehen, die am äußeren Umfang des Motorgehäuses 6 bzw. am äußeren Umfang des mit der Welle 25 verbundenen Planetenkäfigs 48 angreift. Diese mechanische Bremse 60 ist ein geteilter Ring, der über einen Seilzug 61 betätigbar ist.

Der Ordnung halber sei abschließend darauf hingewiesen, daß zum besseren Verständnis des Aufbaus des Antriebes dieser bzw. dessen Bestandteile teilweise unmaßstäblich und/oder vergrößert und/oder verkleinert dargestellt wurden.

### Bezugszeichenaufstellung

- 1: Gehäuse
- 2: Antriebsstrang
- 3: Antriebsstrang
- 4: Läufer
- 5: Ständer

- 6: Motorgehäuse
- 7: Planetenachse
- 8: Planetenradsatz
- 9: Sonnenrad
- 10: Sonnenrad

- 11: Planetenachse
- 12: Planetenradsatz
- 13: Sonnenrad
- 14: Sonnenrad
- 15: Planetenachse

- 16: Planetenradsatz
- 17: Sonnenrad
- 18: Sonnenrad
- 19: Bremsvorrichtung
- 20: Sonnenrad

- 21: Wälzlager
- 22: Wälzlager
- 23: Wellenstummel
- 24: Planetenkäfig
- 25: Welle

- 26: Wälzlager
- 27: Wälzlager
- 28: Radwelle
- 29: Wälzlager
- 30: Wälzlager

- 31: Reibfläche
- 32: Bremsscheibe
- 33: Erregerwicklung
- 34: Tellerfeder
- 35: Betätigungsvorrichtung

- 36: Kohle
- 37: Schleifring
- 38: Wälzlager
- 39: Wälzlager
- 40: Planetenkäfig

- 41: Wälzlager
- 42: Wälzlager
- 43: Radwelle
- 44: Wälzlager
- 45: Wälzlager

- 46: Wälzlager
- 47: Planetenkäfig
- 48: Planetenkäfig
- 49: Wälzlager
- 50: Wälzlager

- 51: Wälzlager
- 52: Wälzlager
- 53: Wälzlager
- 54: Planetenradsatz
- 55: Sonnenrad

- 56: Sonnenrad
- 57: Planetenradsatz
- 58: Sonnenrad
- 59: Sonnenrad
- 60: Bremse

- 61: Seilzug

## Patentansprüche

1. Elektrischer Antrieb für ein Fahrzeug, insbesondere für ein mehrspuriges Elektromobil, wobei ein zum Fahrzeugaufbau bzw. zum Fahrzeugrahmen feststehendes Gehäuse (1) vorgesehen ist, wobei in diesem Gehäuse (1) ein Motorgehäuse (6) mit einem Ständer (5) und ein im Motorgehäuse (6) vorgesehener Läufer (4) jeweils drehbar gelagert sind und das Motorgehäuse (6) und der Läufer (4) zur Arbeitsleistung eine gegensinnige Drehbewegung ausführen, wobei ein Antriebsstrang (2) mit dem Läufer (4) bzw. mit dem Motorgehäuse (6) verbunden ist und die Drehbewegung des Läufers (4) bzw. des Motorgehäuses (6) über eine Getriebeeinrichtung mit gleichsinniger An- und Abtriebsdrehrichtung und ein anderer Antriebsstrang (3) mit dem Motorgehäuse (6) bzw. mit dem Läufer (4) verbunden ist und die Drehbewegung des Motorgehäuses (6) bzw. des Läufers (4) über eine Getriebeeinrichtung mit gegensinniger An- und Abtriebsdrehrichtung übersetzt ist, **dadurch gekennzeichnet, daß** die Getriebeeinrichtungen Planetengetriebe sind, wobei der Läufer (4) über eine Welle (25) bzw. das Motorgehäuse (6) über eine Welle (23) mit einem Planetenkäfig (40, 48 bzw. 24, 47) des zugeordneten Planetengetriebes fest verbunden ist und eine Planetenachse (7 bzw. 11) mindestens eines Planetenradsatzes (8, 54 bzw. 12, 57) bewegt.

2. Elektrischer Antrieb nach Anspruch 1, **dadurch gekennzeichnet, daß** die Drehbewegung des Läufers (4) über die Welle (25) bzw. die Drehbewegung des Motorgehäuses (6) die Planetenachse (7 bzw. 11) mindestens eines Planetenradsatzes (8, 54 bzw. 12, 57) bewegt, der mindestens aus je zwei drehfest verbundenen Rädern, deren Drehachsen starr gekoppelt um die Drehachse der Welle (25) bzw. des Motorgehäuses (6) umlaufen, besteht und daß ein Rad des Planetenradsatzes (8, 54 bzw. 12, 57) mit einem drehfest mit dem Gehäuse (1), konzentrisch zur Wellen- bzw. Motorgehäuseachse angeordneten Sonnenrad (9, 55 bzw. 13, 58) kämmt und ein weiteres Rad des Planetenradsatzes (8, 54 bzw. 12, 57) mit einem konzentrisch zur Wellen- bzw. Motorgehäuseachse angeordneten Sonnenrad (10, 55 bzw. 14, 59) kämmt, das die zugeordnete Radwelle (28 bzw. 43) antreibt, wobei das dem Gehäuse (1) zugeordnete Sonnenrad (9, 55 bzw. 13, 58) einen unterschiedlichen Durchmesser zu dem der Radwelle (28 bzw. 43) zugeordneten Sonnenrad (10, 55 bzw. 14, 59) aufweist.

3. Elektrischer Antrieb nach Anspruche 1 oder 2, **dadurch gekennzeichnet, daß** bei einem Antriebsstrang (2) das dem Gehäuse (1) zugeordnete Sonnenrad (9, 58) einen kleineren Durchmesser als das der Radwelle (43) zugeordnete Sonnenrad (10,59) und beim anderen Antriebsstrang (3) das dem Gehäuse (1) zugeordnete Sonnenrad (13, 55) einen größeren Durchmesser als das der Radwelle (28) zugeordnete Sonnenrad (14, 56) aufweist.

4. Elektrischer Antrieb nach einem oder mehreren der Ansprüche 1 bis 3, **dadurch gekennzeichnet, daß** die Getriebeeinrichtungen ein Übersetzungsverhältnis aufweisen, das dem Verhältnis der Durchmesser der feststehenden Sonnenräder (9, 13 bzw. 55, 58) entspricht.

5. Elektrischer Antrieb nach einem oder mehreren der Ansprüche 1 bis 4, **dadurch gekennzeichnet, daß** die Getriebeeinrichtung zweistufig ausgeführt ist, wobei eine Planetenachse (15) mit der Welle (25) bzw. mit dem Motorgehäuse (6) umläuft, auf der ein Planetenradsatz (16) mit drei zueinander feststehenden Rädern drehbar gelagert ist und der Planetenradsatz (16) einerseits im Eingriff mit frei drehbaren Sonnenrädern (17,18), die durch eine Bremsvorrichtung (19) alternativ feststellbar sind und anderseits mit dem der Radwelle (28) zugeordneten Sonnenrad (20) im Eingriff steht.

6. Elektrischer Antrieb nach einem oder mehreren der Ansprüche 1 bis 5, **dadurch gekennzeichnet, daß** der Planetenkäfig (24 bzw. 40) abtriebsseitig mit einer Fläche, insbesondere mit einer konischen Reibfläche (31) versehen ist, auf die eine zum Gehäuse (1) drehfest gelagerte Bremsscheibe (32) über eine elektromagnetische Betätigungsvorrichtung (35) wirkt.

7. Elektrischer Antrieb nach einem oder mehreren der Ansprüche 1 bis 6, **dadurch gekennzeichnet, daß** eine mechanische Bremse vorgesehen ist, die die Drehbewegung des Motorgehäuses (6) bzw. die Drehbewegung des Läufers (4), insbesondere gleichzeitig, bremst.

8. Elektrischer Antrieb nach einem oder mehreren der Ansprüche 1 bis 7, **dadurch gekennzeichnet, daß** die mechanische Bremse (60) am äußeren Umfang des Motorgehäuses (6) bzw. am äußeren Umfang des mit der Welle (25) verbundenen Planetenkäfigs (48) angreift.

9. Elektrischer Antrieb nach einem oder mehreren der Ansprüche 1 bis 8, **dadurch gekennzeichnet, daß** die mechanische Bremse (60) ein, insbesondere geteilter oder geschlitzter Ring ist.

10. Elektrischer Antrieb nach einem oder mehreren der Ansprüche 1 bis 9, **dadurch gekennzeichnet, daß** die mechanische Bremse (60) über einen Seilzug (61) betätigbar ist.

11. Elektrischer Antrieb nach einem oder mehreren der Ansprüche 1 bis 10, **dadurch gekennzeichnet, daß** die mechanische Bremse (60) magnetisch, insbesondere über einen Hubmagnet am Seilzug (61), betätigbar ist.

## Claims

1. Electric drive for a motor vehicle, in particular for a multi-track electromobile, whereby a housing (1) fixed relative to the motor vehicle structure or the vehicle frame is provided, and in said housing (1) a motor frame (6) with a stator (5) and a rotor (4) provided in the motor frame (6) are rotatably mounted respectively and the motor frame (6) and the rotor (4) rotate in opposite directions for work output, whereby one drive line (2) is connected with the rotor (4) or with the motor frame (6) and the rotational movement of the rotor (4) or the motor frame (6) is connected by a transmission device with the drive and output rotating in the same direction and a second drive line (3) is connected with the motor frame (6) or with the rotor (4) and the rotational movement of the motor frame (6) or the rotor (4) is transmitted by a transmission device with a drive and output rotating in an opposite direction, **characterised by** the fact that the transmission devices are planet gears, whereby the rotor (4) is securely connected via the shaft (25) or the motor frame (6) with a planet cage (40, 48 or 24, 47) of the assigned planet gear, and moves a planet axis (7 or 11) of at least one planet gear set (8, 54 or 12, 57).

2. Electric drive according to Claim 1, **characterised by** the fact that the rotational movement of the rotor (4) via the shaft (25) or the rotational movement of the motor frame (6) moves the planet axis (7 or 11) at least of a planet gear set (8, 54 or 12, 57), which comprises at least two rotation-fast connected gears, the axes of rotation of which rotate rigidly coupled about the axis of rotation of the shaft (25) or the motor frame (6), and in that one gear of the planet gear set (8, 54 or 12, 57) meshes with a sun gear (9, 55 or 13, 58) arranged rotation-fast with the housing (1) concentric to the shaft or motor frame axis, and an additional gear of the planet gear set (8, 54 or 12, 57) meshes with a sun gear (10, 55 or 14, 59) arranged concentrically to the shaft or motor housing axis, which sun gear drives the assigned gear shaft (28 or 43), whereby the sun gear (9, 55 or 13, 58) assigned to the housing (1) has a different diameter to the sun gear (10, 55 or 14, 59) assigned to the gear shaft (28 or 43).

3. Electric drive according to one or both of Claims 1 to 2, **characterised by** the fact that in one drive line (2) the sun gear (9, 58) assigned to the housing (1) has a smaller diameter than the sun gear (10, 59) assigned to the gear shaft (43) and in the other drive line (3) the sun gear (13, 55) assigned to the housing (1) has a greater diameter than the sun gear (14, 56) assigned to the gear shaft (28).

4. Electric drive according to one or more of Claims 1 to 3, **characterised by** the fact that the transmission devices have a transmission ratio which corresponds to the ratio of the diameters of the fixed sun gears (9, 13 or 55, 58).

5. Electric drive according to one or more of Claims 1 to 4, **characterised by** the fact that the transmission device is designed in two stages, whereby a planet axis (15) rotates with the shaft (25) or with the motor frame (6), on which a planet gear set (16) with three relatively fixed gears is rotatably mounted, and the planet gear set (16) on the one hand is in engagement with freely rotatable sun gears (17, 18), which are alternatively securable by means of a braking device (19), and on the other hand with the sun gear (20) assigned to the gear shaft (28).

6. Electric drive according to one or more of Claims 1 to 5, **characterised by** the fact that the planet cage (24 or 40) is provided on the output side with a surface, in particular with a conical frictional surface (31), against which a brake disc (32) mounted rotation-fast relative to the housing (1) acts by means of an electromagnetic activating device (35).

7. Electric drive according to one or more of Claims 1 to 6, **characterised by** the fact that a mechanical brake is provided, which brakes the rotational movement of the motor frame (6) and the rotational movement of the rotor (4), in particular simultaneously.

8. Electric drive according to one or more of Claims 1 to 7, **characterised by** the fact that the mechanical brake (60) acts on the outer periphery of the motor frame (6) or on the outer periphery of the planet cage (48) connected with the shaft (25).

9. Electric drive according to one or more of Claims 1 to 8, **characterised by** the fact that the mechanical brake (60) is in particular a divided or slotted ring.

10. Electric drive according to one or more of Claims 1 to 9, **characterised by** the fact that the mechanical brake (60) can be activated by a cable pull (61).

11. Electric drive according to one or more of Claims 1 to 10, **characterised by** the fact that the mechanical brake (60) can be activated magnetically, in particular by means of a lifting magnet on the cable pull (61).

## Revendications

1. Entraînement électrique pour un véhicule, notamment pour un véhicule automobile électrique multi-roues, un boîtier (1) fixé à la carrosserie et/ou au châssis du véhicule étant prévu, et un carter-moteur (6) avec un stator (5) et un rotor (4) prévu dans le carter-moteur (6) étant logés, chacun de façon mobile, dans ce boîtier (1) et le carter-moteur (6) et le rotor (4) exécutant un mouvement rotatif en sens inverse pour effectuer leur travail, une corde d'entraînement (2) étant reliée au rotor (4) et/ou au carter-moteur (6), et le mouvement rotatif du rotor (4) et/ou du carter-moteur (6) étant relié au carter-moteur (6) et/ou au rotor (4) via un dispositif d'engrenage présentant le même sens de rotation pour l'entraînement et la réduction, une autre corde d'entraînement (3) étant reliée au carter-moteur (6) et/ou au rotor (4), et le mouvement rotatif du carter-moteur (6) et/ou du rotor (4) étant transmis via un dispositif d'engrenage présentant un sens de rotation inverse pour l'entraînement et la réduction , **caractérisé en ce que** les dispositifs d'engrenage sont des engrenages planétaires, le rotor (4) étant fixé solidairement à une cage planétaire (40, 48 et/ou 24, 47) de l'engrenage planétaire correspondant via un arbre (25) et/ou le carter-moteur (6) y étant fixé solidairement via un arbre (23), et un axe planétaire (7 ou 11) déplaçant au moins un jeu de roues planétaires (8, 54 et/ou 12, 57).

2. Entraînement électrique selon revendication 1, **caractérisé en ce que** le mouvement rotatif du rotor (4) via l'arbre (25) et/ou le mouvement rotatif du carter-moteur (6) déplace l'axe planétaire (7 et/ou 11) d'au moins un jeu de roues planétaires (8, 54 et/ou 12, 57) composé respectivement d'au moins deux roues reliées de façon non rotative dont les axes rotatifs, accouplés rigidement, tournent autour de l'axe rotatif de l'arbre (25) et/ou du carter-moteur (6), et qu'une roue du jeu de roues planétaires (8, 54 et/ou 12, 57) peigne, avec une roue solaire (9, 55 et/ou 13, 58) agencée de façon non rotative avec le boîtier (1) et concentrique par rapport à l'axe de l'arbre et/ou du carter-moteur, et qu'une autre roue du jeu de roues planétaires (8, 54 et/ou 12, 57) peigne, avec une roue solaire (10, 55 et/ou 14, 59) agencée de façon concentrique par rapport à l'axe de l'arbre et/ou du carter-moteur, qui entraîne l'arbre de roue (28 et/ou 43) correspondant, la roue solaire (9, 55 et/ou 13, 58) correspondant au boîtier (1) présentant un diamètre différent de celui de la roue solaire (10, 55 et/ou 14, 59) correspondant à l'arbre de roue (28 et/ou 43).

3. Entraînement électrique selon la revendication 1 ou 2, **caractérisé en ce que**, pour une corde d'entraînement (2), la roue solaire (9, 58) correspondant au boîtier (1) présente un diamètre plus petit que la roue solaire (10, 59) correspondant à l'arbre de la roue (43) et que pour l'autre corde d'entraînement (3), la roue solaire (13, 55) correspondant au boîtier (1) présente un diamètre plus grand que la roue solaire (14, 56) correspondant à l'arbre de roue (28).

4. Entraînement électrique selon une ou plusieurs des revendications 1 à 3, **caractérisé en ce que** les dispositifs d'engrenage présentent un rapport de multiplication qui correspond au rapport des diamètres des roues solaires fixes (9, 13 et/ou 55, 58).

5. Entraînement électrique selon une ou plusieurs des revendications 1 à 4, **caractérisé en ce que** le dispositif d'engrenage est exécuté en deux étages de réduction, un axe planétaire (15) tournant avec l'arbre (25) et/ou avec le carter-moteur (6), sur lequel un jeu de roues planétaires (16) est agencé de façon rotative avec trois roues fixes l'une par rapport à l'autre, le jeu de roues planétaires (16) engrenant d'une part des roues solaires (17, 18) tournant librement, qui peuvent être bloquées en alternance par un dispositif de freinage (19) et engrenant d'autre part la roue solaire (20) correspondant à l'arbre de roue (28).

6. Entraînement électrique selon une ou plusieurs des revendications 1 à 5, **caractérisé en ce que** la cage planétaire (24 et/ou 40) est pourvue côté réduction d'une surface, notamment d'une surface de friction (31) conique, sur laquelle agit un disque à frein (32) agencé de façon non rotative par rapport au boîtier (1), via un dispositif d'actionnement (35) électromagnétique.

7. Entraînement électrique selon une ou plusieurs des revendications 1 à 6, **caractérisé en ce qu'**il est prévu un frein mécanique qui freine le mouvement rotatif du carter-moteur (6) et/ou le mouvement rotatif du rotor (4), notamment simultanément.

8. Entraînement électrique selon une ou plusieurs des revendications 1 à 7, **caractérisé en ce que** le frein mécanique (60) agit sur le pourtour extérieur du carter-moteur (6) et/ou sur le pourtour extérieur de la cage planétaire (48) reliée à l'arbre (25).

9. Entraînement électrique selon une ou plusieurs des revendications 1 à 8, **caractérisé en ce que** le frein mécanique (60) est un anneau notamment sectionné ou à fente.

10. Entraînement électrique selon une ou plusieurs des revendications 1 à 9, **caractérisé en ce que** le frein mécanique (60) peut être actionné via un câble de transmission (61).

11. Entraînement électrique selon une ou plusieurs des revendications 1 à 10, **caractérisé en ce que** le frein mécanique (60) peut être actionné de façon magnétique, notamment par l'intermédiaire d'un électro-aimant de levage sur le câble de transmission (61).
